# EUROPÄISCHE PATENTSCHRIFT

(11) **EP 1 105 629 B1**
(45) Veröffentlichungstag und Bekanntmachung des Hinweises auf die Patenterteilung: **21.05.2003**
(21) Anmeldenummer: 00912630.1
(22) Anmeldetag: 22.03.2000
(51) Int. Cl.: F01N 3/08, F02D 41/02, B01D 53/96, B01D 53/94

(54) **VERFAHREN ZUR PERIODISCHEN DESULFATISIERUNG EINES STICKOXID- ODER SCHWEFELOXID-SPEICHERS EINER ABGASREINIGUNGSANLAGE**
METHOD FOR PERIODICALLY DESULFATING A NITROGEN OXIDE OR SULFUR OXIDE ACCUMULATOR OF AN EXHAUST GAS CLEANING SYSTEM
PROCEDE DE DESULFATATION D'UN ACCUMULATEUR D'OXYDES AZOTIQUES OU D'OXYDES DE SOUFRE FAISANT PARTIE D'UNE INSTALLATION DE PURIFICATION DE GAZ D'ECHAPPEMENT

(30) Priorität: 19.05.1999 DE 19922962
(43) Veröffentlichungstag der Anmeldung: 13.06.2001
(73) Patentinhaber: DaimlerChrysler AG, 70567 Stuttgart (DE)
(72) Erfinder: BÖGNER, Walter, D-71686 Remseck (DE); KARL, Günter, D-73732 Esslingen (DE); KRUTZSCH, Bernd, D-73770 Denkendorf (DE); RENFFTLEN, Stefan, D-73054 Eislingen (DE); SCHÖN, Christof, D-73630 Remshalden (DE); VOIGTLÄNDER, Dirk, D-70825 Korntal-Münchingen (DE); WENNINGER, Günter, D-70599 Stuttgart (DE)
(86) Internationale Anmeldenummer: EP0002518
(87) Internationale Veröffentlichungsnummer: WO00071864

(56) Entgegenhaltungen:
- EP-A- 0 860 595
- WO-A-98/27322
- DE-C- 19 747 222
- DE-C- 19 830 829
- JP-A- 11 343 836

## Beschreibung

Die Erfindung bezieht sich auf ein Verfahren zur periodischen Desulfatisierung eines Stickoxid- oder Schwefeloxid-Speichers einer Abgasreinigungsanlage eines Verbrennungsmotors nach dem Oberbegriff des Anspruchs 1, wobei der Begriff Verbrennungsmotor vorliegend synonym für jedwede Art von Brennkraftmaschine verwendet wird.

Abgasreinigungsanlagen mit einem Stickoxid(NOₓ)-Speicher, wie einem NOₓ-Adsorberkatalysator, und optional einem diesem vorgeschalteten Schwefeloxid(SOₓ)-Speicher, wie einer sogenannten SOₓ-Falle, auch SOₓ-Trap genannt, werden insbesondere in Kraftfahrzeugen eingesetzt, um den Stickoxidausstoß des Kraftfahrzeug-Verbrennungsmotors zu minimieren. Dazu wird bekanntermaßen in Motorbetriebsphasen mit vermehrter Stickoxidbildung, wie im Magerbetrieb, Stickoxid im NOₓ-Speicher zwischengespeichert, z.B. durch einen Adsorptionsvorgang, um in einer hierfür geeigneten späteren Betriebsphase, wie im Fettbetrieb, wieder freigesetzt und umgewandelt werden zu können, z.B. mittels eines entsprechenden Desorptionsvorgangs und anschließender Reduktion zu Stickstoff. Unter Mager- bzw. Fettbetrieb ist hierbei wie üblich ein Motorbetrieb mit magerem bzw. fettem Motorluftverhältnis, d.h. oberhalb bzw. unterhalb des stöchiometrischen Wertes liegendem Luft/Kraftstoff-Verhältnis des im Motor verbrannten Luft/Kraftstoff-Gemischs zu verstehen.

Eine bekannte Schwierigkeit solcher Anlagen besteht darin, daß besonders im Magerbetrieb des Motors aufgrund von Schwefel, der in üblichen Kraftstoffen und Motorölen enthalten ist, Schwefeldioxid im Abgas vorhanden ist, das durch Sulfatbildung zu einer Schwefelvergiftung des NOₓ-Speichers führen kann, welche die NOₓ-Speicherkapazität desselben verringert. Es ist daher bekannt, den NOₓ-Speicher immer dann, wenn ein merkliches Nachlassen seiner NOₓ-Speicherkapazität festgestellt wird, einem Desulfatisierungsvorgang zu unterziehen, um ihn von angelagertem Sulfat zu befreien. Alternativ wird dem NOₓ-Speicher eine SOₓ-Falle vorgeschaltet, die dann in analoger Weise einer periodischen Desulfatisierung unterzogen wird.

Zur Erzielung einer effektiven Desulfatisierung des Stickoxid- bzw. Schwefeloxid-Speichers ist es bekannt, erhöhte Abgastemperaturen von z.B. über 600°C und ein fettes, d.h. unterhalb des stöchiometrischen Wertes liegendes Speicherluftverhältnis einzustellen, wobei unter dem Begriff Speicherluftverhältnis das Verhältnis von Sauerstoff bzw. Luft zu Kraftstoff bzw. unverbrannten Kohlenwasserstoffen im Abgas, das dem Speicher zugeführt wird, zu verstehen ist. Die Einstellung solcher Bedingungen ist z.B. in der Veröffentlichung W. Strehlau et al., New Developments in Lean NOₓ Catalysis for Gasoline Fueled Passenger Cars in Europe, SAE 96 2047, 1996 angegeben.

In der Offenlegungsschrift EP 0 636 770 A1 wird zur Desulfatisierung eines NOₓ-Adsorberkatalysators vorgeschlagen, den Verbrennungsmotor von magerem auf fettes Motorluftverhältnis umzustellen und bei Bedarf zusätzlich eine dem NOₓ-Adsorber zugeordnete, elektrische Heizeinrichtung zu aktivieren. Die Desulfatisierungsphase wird jeweils für eine bestimmte Zeitdauer von etwa 10 Minuten beibehalten.

Zur Durchführung der Desulfatisierung sind auch bereits verschiedentlich Verfahren der eingangs genannten Art vorgeschlagen worden. Bei diesen wird die Einstellung eines fetten Motorbetriebs mit einer Sekundärluftzufuhr zum Stickoxid- bzw. Schwefeloxid-Speicher kombiniert. Bei einem in der Offenlegungsschrift DE 195 22 165 A1 neben anderweitigen Vorgehensweisen offenbarten derartigen Verfahren erfolgt dies so, daß die Temperatur des dortigen NOₓ-Speicherkatalysators durch geeignete Einstellung des Motorluftverhältnisses und der Sekundärluftmenge in Verbindung mit einer Spätverstellung des Zündzeitpunktes auf einen gewünschten, erhöhten Sollwert eingeregelt wird. Bei einem in der älteren deutschen Patentanmeldung 197 47 222.2 beschriebenen Verfahren werden das Motorluftverhältnis und die Sekundärluftzufuhrrate wenigstens in Abhängigkeit vom Ausgangssignal einer stromabwärts eines zu desulfatisierenden NOₓ-Speicherkatalysators angeordneten Lambda-Sonde, d.h. in Abhängigkeit vom Speicherluftverhältnis eingestellt. Bei einem weiteren, in der älteren deutschen Patentanmeldung 198 02 631.5 beschriebenen Verfahren wird eine einem NOₓ-Adsorberkatalysator vorgeschaltete SOₓ-Falle periodisch unter Sekundärluftzufuhr und Einstellung eines fetten Mototrbetriebs desulfatisiert, wobei das SOₓ-Speicherluftverhältnis und die SOₓ-Speichertemperatur auf vorbestimmten Sollwerten gehalten werden, insbesondere durch geeignete Variation der zugeführten Sekundärluftmenge und/oder des Motorluftverhältnisses. Weiter ist in der nicht vorveröffentlichten europäischen Offenlegungsschrift EP 1 050 675 A1 ein Verfahren zur Desulfatisierung eines Stickoxidadsorbers beschrieben, bei welchem die Abgaszusammensetzung während des Desulfatisierungsvorgangs oszillierend zwischen mager und fett eingestellt wird. Während der fetten Desulfatisierungsphase werden freigesetzte Schwefelverbindungen mittels eines dem Stickoxidadsorber nachgeschaltetem Sauerstoffzwischenspeicher oxidiert.

Der Erfindung liegt als technisches Problem die Bereitstellung eines Verfahrens der eingangs genannten Art zugrunde, mit dem sich ein Stickoxid- oder Schwefeloxid-Speicher einer Abgasreinigungsanlage eines Verbrennungsmotors durch Sekundärluftzufuhr und Einstellung eines fetten Motorluftverhältnisses besonders effektiv desulfatisieren läßt.

Die Erfindung löst das Problem durch die Bereitstellung eines Verfahrens mit den Merkmalen des Anspruchs 1. Bei diesem Verfahren wird nach Errreichen einer vorgebbaren Desulfatisierungstemperatur wenigstens während eines Teils des anschließenden Desulfatisierungszeitraums das Speicherluftverhältnis, d.h. das Sauerstoff/Reduktionsmittel-Verhältnis, der Abgasatmosphäre im zu desulfatisierenden NOₓ- oder SOₓ-Speicher, durch entsprechende Änderung der zugeführten Sekundärluftmenge und/oder des Motorluftverhältnisses, d.h. des Luft/Kraftstoff-Verhältnisses des im Verbrennungsmotor verbrannten Luft/Kraftstoff-Gemischs, zwischen einer oxidierenden und einer reduzierenden Atmosphäre oszillierend derart eingestellt, dass es im Mittel im fetten Bereich verbleibt.

Diese Vorgehensweise nutzt die Erkenntnis, daß in reduzierender Atmosphäre, d.h. bei fettem Speicherluftverhältnis, die im Stickoxid- bzw. Schwefeloxid-Speicher vorhandenen Sulfate unter Bildung von Sulfiden zersetzt werden, die ein meist im Speicherkörper vorhandenes, katalytisch aktives Edelmetallmaterial belegen und zu einer verminderten katalytischen Aktivität desselben führen können, was die weitere Sulfatzersetzung erschwert und verzögert. Durch das erfindungsgemäße Zwischenschalten von Desulfatisierungsphasen mit mindestens stöchiometrischem, vorzugsweise magerem Speicherluftverhältnis, d.h. stöchiometrischer bzw. oxidierender Atmosphäre, können die gebildeten Sulfide unter Freisetzung von Schwefeldioxid (SO₂) abgebaut werden, wonach dann in einer anschließenden reduzierenden Phase des Desulfatisierungsvorgangs wieder effektiv mit der Sulfatzersetzung fortgesetzt werden kann. Das oszillierende Ändern des Speicherluftverhältnisses von fett auf stöchiometrisch oder mager und umgekehrt wird durch entsprechendes Ändern der zugeführten Sekundärluft- und damit Sauerstoffmenge und/oder des Motorluftverhältnisses und damit der Reduktionsmittelmenge bewirkt. Die oszillierende Modulation des Speicherluftverhältnisses wird so vorgenommen, dass dieses im Mittel im fetten Bereich verbleibt und wird vorzugsweise so lange beibehalten, bis der größte Teil der gespeicherten Sulfate zersetzt und desorbiert wurde, so daß die NOₓ- oder SOₓ-Speicherkapazität des Stickoxid- bzw. Schwefeloxid-Speichers wieder ausreichend groß ist.

Bei einem nach Anspruch 2 weitergebildeten Verfahren lassen sich die Amplitude und/oder die Frequenz des oszillierenden Speicherluftverhältnisses betriebszustandsabhängig variabel einstellen, so daß in der jeweiligen Betriebssituation eine schnellstmögliche Desulfatisierung des Stickoxid- oder Schwefeloxid-Speichers erzielt wird.

Bei einem nach Anspruch 3 weitergebildeten Verfahren wird das Speicherluftverhältnis in Form einer Regelung oszillierend zwischen oxidierender bzw. stöchiometrischer und reduzierender Atmosphäre variiert, d.h. auf einen entsprechend oszillierenden Sollwert eingeregelt, wobei der Istwert mittels einer geeignet stromaufwärts oder stromabwärts des Stickoxid- oder Schwefeloxid-Speichers positionierten Lambda-Sonde erfaßt wird.

Bei einem nach Anspruch 4 weitergebildeten Verfahren wird zu Beginn des Desulfatisierungsvorgangs bis zum Erreichen einer vorgebbaren Desulfatisierungstemperatur das Speicherluftverhältnis durch entsprechende Fetteinstellung des Motorluftverhältnisses trotz aktivierter Sekundärluftzufuhr bleibend wenigstens geringfügig im fetten Bereich gehalten, so daß durch Reduktionsmitteloxidation der Speicher relativ rasch auf die gewünschte Desulfatisierungstemperatur gebracht werden kann.

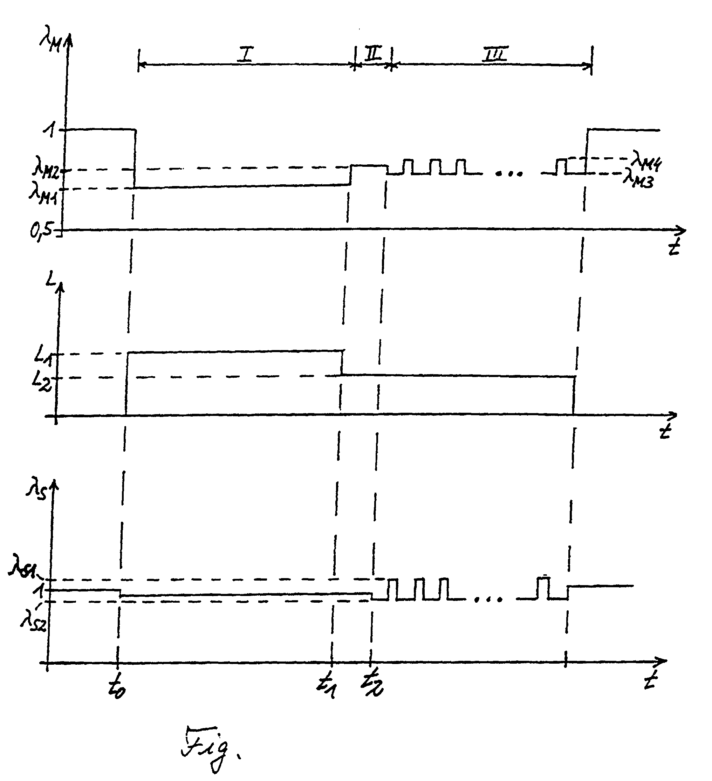

Eine vorteilhafte Ausführungsform der Erfindung ist in der Zeichnung veranschaulicht und wird nachfolgend beschrieben.

Die einzige Figur zeigt drei Diagramme in zeitsynchron übereinanderliegender Form über den zeitlichen Verlauf des Motorluftverhältnisses, der zugeführten Sekundärluftmenge bzw. des Speicherluftverhältnisses während eines Desulfatisierungsvorgangs.

Der in der Figur anhand zugehöriger Diagramme illustrierte Desulfatisierungsvorgang dient durch periodische Anwendung desselben der wiederholten Desulfatisierung eines Stickoxid- oder Schwefeloxid-Speichers einer Abgasreinigungsanlage eines Verbrennungsmotors, z.B. in einem Kraftfahrzeug. Der Speicher kann insbesondere ein NOₓ-Adsorber oder eine SOₓ-Falle sein. Der Desulfatisierungsvorgang wird immer dann durchgeführt, wenn die NOₓ-Speicherkapazität des Stickoxid-Speichers bzw. die SOₓ-Speicherfähigkeit der SOₓ-Falle merklich nachläßt. Durch den Desulfatisierungsvorgang wird der betreffende Speicher von zumeist in Sulfatform eingelagertem Schwefel gereinigt und erhält dadurch wieder weitestgehend seine anfängliche NOₓ- bzw. SOₓ-Speicherfähigkeit.
Der gezeigte Desulfatisierungsvorgang besteht aus drei aufeinanderfolgenden Phasen. Eine erste Desulfatisierungsphase I dient dazu, den Speicher möglichst schnell auf eine zur Desulfatisierung gewünschte, erhöhte Temperatur zu bringen, die höher ist als in der vorangegangenen Betriebsphase, in welcher der Speicher seine normale NOₓ- bzw. SOₓ-Speicherfunktion erfüllt. Dazu wird zum Startzeitpunkt t₀ des Desulfatisierungsvorgangs mit der Zufuhr von Sekundärluft zum NOₓ- bzw. SOₓ-Speicher mit einer vorgebbaren Zufuhrrate L₁ begonnen, wie im mittleren Diagramm der Sekundärluftzufuhrrate L in Abhängigkeit von der Zeit t dargestellt. Gleichzeitig wird das Motorluftverhältnis ^{λ}_{M}, d.h. das Luft/Kraftstoff-Verhältnis des im Motor verbrannten Luft/Kraftstoff-Gemischs, auf einen im fetten Bereich liegenden Wert λ_{M1} eingestellt, nachdem es zuvor beispielsweise auf dem stöchiometrischen Wert eins lag, wie im oberen Diagramm des zeitlichen Verlaufs des Motorluftverhältnisses λ_{M} in der Figur dargestellt.

Das Motorluftverhältnis λ_{M} und die Sekundärluftzufuhrrate L werden während der ersten Desulfatisierungsphase I so aufeinander abgestimmt, daß das daraus resultierende Speicherluftverhältnis ^{λ}_{S}, d.h. das Sauerstoff/Reduktionsmittel-Verhältnis des mit der zugeführten Sekundärluft angereicherten, dem zu desulfatisierenden Speicher zugeführten Motorabgases, im fetten Bereich, vorzugsweise zwischen 0,70 und 0,99 gehalten wird. Im gezeigten Beispiel des in der Figur untersten Diagramms über den Zeitverlauf des Speicherluftverhältnisses ^{λ}_{S} liegt letzteres geringfügig im fetten Bereich, d.h. geringfügig unter dem stöchiometrischen Wert eins. Die durch den fetten Motorbetrieb im Motorabgas enthaltenen Reduktionsmittel, wie unverbrannte Kohlenwasserstoffe etc., verbrennen im NOₓ- bzw. SOₓ-Speicher mit dem in der zugeführten Sekundärluft enthaltenen Sauerstoff und ermöglichen dadurch eine rasche Speicheraufheizung. Zusätzlich oder alternativ zu dieser Maßnahme können anderweitige Speicheraufheizmittel vorgesehen sein, z.B. eine elektrische Heizeinrichtung.

Sobald somit auf die eine oder andere Weise die gewünschte Desulfatisierungstemperatur erreicht ist, die vorzugsweise zwischen 400°C und 650°C liegt, braucht die Temperatur nicht mehr weiter erhöht, sondern nur noch gehalten werden. In einer sich dann zum entsprechenden Zeitpunkt t₁ an die erste anschließenden zweiten Desulfatisierungsphase II, die eine relativ kurze Übergangsphase bildet, wird daher die weitere Energiezufuhr so weit vermindert, daß die Speichertemperatur im optimalen Desulfatisierungsbereich verbleibt. Dazu wird einerseits die zudosierte Sekundärluftmenge durch Verringerung der Zufuhrrate L vom Wert L₁ während der ersten Desulfatisierungsphase I auf einen demgegenüber geringeren Wert L₂ reduziert und andererseits das Motorluftverhältnis ^{λ}_{M} vom bisherigen unterstöchiometrischen Wert ^{λ}_{M1} auf einen etwas weniger unterstöchiometrischen Wert λ_{M2} angehoben.

Die Verstellungen von Sekundärluftzufuhrrate L und Motorluftverhältnis λ_{M} werden so aufeinander abgestimmt, daß das daraus resultierende Speicherluftverhältnis λ_{S} auch in der zweiten Desulfatisierungsphase II im fetten Bereich bleibt, z.B. unverändert auf dem Wert der ersten Desulfatisierungsphase I. Durch die damit beim Übergang von der ersten zur zweiten Desulfatisierungsphase bewirkte Verringerung sowohl der vom Motor emittierten Reduktionsmittelmenge als auch der zudosierten Sekundärluftmenge werden der in den Motor einzuspritzende Kraftstoff und der Leistungsbedarf einer zur Sekundärluftzuführung verwendeten Sekundärluftpumpe minimiert, was unnötigen Energieverbrauch vermeidet, und zudem wird der zu desulfatisierende Speicher vor Überhitzung geschützt.

Nach stabiler Einstellung der zur Aufrechterhaltung der gewünschten Desulfatisierungstemperatur benötigten Sekundärluft- und Reduktionsmittelmenge wird dann zu einem entsprechenden Zeitpunkt t₂ von der zweiten auf eine dritte Desulfatisierungsphase III übergegangen, in der das Speicherluftverhältnis ^{λ}_{S}, wie gezeigt, mehrfach zwischen einer oxidierenden und einer reduzierenden Atmosphäre oszillierend verändert, d.h. z.B. in Form von Rechteckimpulsen abwechselnd größer als eins, d.h. überstöchiometrisch bzw. mager, und kleiner als eins, d.h. unterstöchiometrisch bzw. fett, eingestellt wird. Im gezeigten Beispiel wechseln kürzere Intervalle mit auf einem überstöchiometrischen Wert λ_{S1} liegendem Speicherluftverhältnis ^{λ}_{S} mit etwas längeren Intervallen ab, in denen das Speicherluftverhältnis ^{λ}_{S} auf einem unterstöchiometrischen Wert ^{λ}_{S2} liegt. Insgesamt sind die Intervallängen und Speicherluftverhältniswerte ^{λ}_{S1}, ^{λ}_{S2} so aufeinander abgestimmt, daß das Speicherluftverhältnis ^{λ}_{S} im Mittel im fetten Bereich verbleibt, vorzugsweise auf einem Wert geringfügig kleiner als eins.

Im gezeigten Beispiel wird die oszillatorische Modulation des Speicherluftverhältnisses ^{λ}_{S} durch eine entsprechende oszillierende Änderung des Motorluftverhältnisses zwischen zwei Motorluftverhältniswerten ^{λ}_{M3}, ^{λ}_{M4} bewirkt, die beide im fetten Bereich liegen und von denen der eine unter und der andere über dem Motorluftverhältniswert ^{λ}_{M2} während der vorangegangenen zweiten Desulfatisierungsphase II liegt. Gleichzeitig wird die für die zweite Desulfatisierungsphase II eingestellte Sekundärluftzufuhrrate L₂ für die dritte Desulfatisierungsphase III beibehalten.

Während somit im gezeigten Beispiel die Modulation des Speicherluftverhältnisses ^{λ}_{S} in der dritten Desulfatisierungsphase III durch alleinige entsprechende Modulation des Motorluftverhältnisses ^{λ}_{M} unter gleichzeitiger Konstanthaltung der Sekundärluftzufuhrrate L erzielt wird, kann die gewünschte oszillierende Änderung des Speicherluftverhältnisses ^{λ}_{S} alternativ durch alleinige entsprechende Modulation der Sekundärluftzufuhrrate L unter Konstanthaltung des Motorluftverhältnisses ^{λ}_{M} oder durch gleichzeitige, aufeinander abgestimmte Modulation sowohl des Motorluftverhältnisses ^{λ}_{M} als auch der Sekundärluftzufuhrrate L eingestellt werden. Die zudosierte Sekundärluftmenge bestimmt jeweils die im zu desulfatisierenden Speicher zur Verfügung stehende Sauerstoffmenge, während das Motorluftverhältnis die im Speicher zur Verfügung stehende Reduktionsmittelmenge festlegt.

Die Einstellung des oszillierenden Speicherluftverhältnisses ^{λ}_{S} während der dritten Desulfatisierungsphase III erfolgt vorzugsweise in Form einer Regelung, der ein entsprechend oszillierender Sollwert vorgegeben wird. Zur Überwachung des Istwertes des Speicherluftverhältnisses ^{λ}_{S} wird dann stromaufwärts oder stromabwärts des NOₓ- bzw. SOₓ-Speichers eine Lambda-Sonde positioniert, deren Ausgangssignal dazu verwendet wird, das Motorluftverhältnis ^{λ}_{M} und/oder die Sekundärluftzufuhrrate L so einzustellen, daß der gewünschte oszillierende Verlauf des Speicherluftverhältnisses λ_{S} erzielt wird.

Es zeigt sich, daß durch die Bereitstellung aufeinanderfolgender Intervalle mit oxidierender und reduzierender Atmosphäre im NOₓ- bzw. SOₓ-Speicher eine sehr effektive Desulfatisierung bewirkt werden kann. In den Zeiträumen mit fettem Speicherluftverhältnis, d.h. reduzierender Atmosphäre, werden eingelagerte Sulfate zersetzt, vorzugsweise unter katalytischer Wirkung eines für den Speicherkörper verwendeten Edelmetall-Katalysatormaterials. Bei dieser Sulfatzersetzung bilden sich Sulfide, die das Edelmetallmaterial zu belegen beginnen, so daß eine Verringerung von dessen katalytischer Aktivität droht. Bevor auf diese Weise das Edelmetallmaterial durch die gebildeten Sulfide merklich vergiftet wird und in seiner katalytischen Wirkung nachläßt, wird auf ein Intervall mit oxidierender, alternativ mit stöchiometrischer Atmosphäre, d.h. mit überstöchiometrischem oder stöchiometrischem Speicherluftverhältnis gewechselt. Dies nutzt die Erkenntnis aus, daß die zuvor gebildeten Sulfide durch den nun ggf. im Überschuß vorhandenen Sauerstoff leicht zu SO₂ oxidiert und in dieser Form aus dem Speicher ausgetragen werden können. Dadurch kann das Edelmetallmaterial, bevor die Sulfatzersetzungsgeschwindigkeit stark abnimmt, von den gebildeten Sulfiden unter SO₂-Freisetzung gereinigt werden. Anschließend wird wieder auf ein Intervall mit reduzierender Atmosphäre zwecks Fortsetzung der Sulfatzersetzung umgestellt.

Mit dieser Vorgehensweise läßt sich eine vergleichweise rasche Reinigung des NOₓ- bzw. SOₓ-Speichers von eingelagerten Sulfaten bewerkstelligen. Die oszillierende Änderung des Speicherluftverhältnisses ^{λ}_{S} zwischen oxidierender bzw. stöchiometrischer und reduzierender Atmosphäre wird so lange fortgesetzt, bis die im Speicher eingelagerten Sulfate in ausreichendem Maß desorbiert und zersetzt wurden, so daß die Speicherkapazität des NOₓ- bzw. SOₓ-Speichers für Stickoxide bzw. Schwefeloxide wieder ausreichend groß ist. Die dritte Desulfatisierungsphase III und damit der Desulfatisierungsvorgang insgesamt wird dann zum betreffenden Zeitpunkt t₃ beendet, wozu im gezeigten Beispiel das Motorluftverhältnis ^{λ}_{M} wieder auf den stöchiometrischen Wert eins eingestellt und die Sekundärluftzuführung beendet wird.

Es versteht sich, daß während der oszillierenden Modulation des Speicherluftverhältnisses ^{λ}_{S} in der dritten Desulfatisierungsphase III die Amplitude, d.h. die Differenz zwischen dem mindestens stöchiometrischen Speicherluftverhältniswert λ_{S1} und dem unter- stöchiometrischen Wert λ_{S2}, und/oder die Frequenz, d.h. die Häufigkeit der Umschaltung zwischen oxidierender bzw. stöchiometrischer Atmosphäre einerseits und reduzierender Atmosphäre andererseits, an die für eine möglichst schnelle Sulfatzersetzung notwendigen Bedingungen angepaßt und dabei insbesondere in Abhängigkeit vom Betriebszustand des Systems variabel eingestellt werden können, und zwar sowohl innerhalb eines Desulfatisierungsvorgangs als auch zwischen verschiedenen der periodisch durchgeführten Desulfatisierungsvorgänge.

## Patentansprüche

1. Verfahren zur periodischen Desulfatisierung eines Stickoxid- oder Schwefeloxid-Speichers einer Abgasreinigungsanlage eines Verbrennungsmotors, bei dem
- dem Stickoxid- oder Schwefeloxid-Speicher während einer jeweiligen Desulfatisierungsperiode durch zugeordnete Sekundärluftzufuhrmittel Sekundärluft und durch Einstellen eines fetten Motorluftverhältnisses ein reduktionsmittelhaltiges Motorabgas zugeführt werden, wobei
- wenigstens während eines Teils (III) der Desulfatisierungsperiode nach Erreichen einer vorgebbaren Desulfatisierungstemperatur das Speicherluftverhältnis (λ_{S}) durch entsprechende Änderung der zugeführten Sekundärluftmenge (L) und/oder des Motorluftverhältnisses (λ_{M}) zwischen einer oxidierenden oder stöchiometrischen Atmosphäre einerseits und einer reduzierenden Atmosphäre andererseits oszillierend eingestellt wird,
**dadurch gekennzeichnet, dass**
die oszillierende Einstellung des Speicherluftverhältnisses (λ_{S}) so vorgenommen wird, dass das Speicherluftverhältnis (λ_{S}) im Mittel in einer reduzierenden Atmosphäre verbleibt.

2. Verfahren nach Anspruch 1, weiter
**dadurch gekennzeichnet, daß**
die Amplitude und/oder die Frequenz der Oszillation des Speicherluftverhältnisses (^{λ}_{S}) zwischen oxidierender oder stöchiometrischer und reduzierender Atmosphäre betriebszustandsabhängig variabel eingestellt wird.

3. Verfahren nach Anspruch 1 oder 2, weiter
**dadurch gekennzeichnet, daß**
das Speicherluftverhältnis (^{λ}_{S}) mittels einer stromaufwärts oder stromabwärts des Stickoxid- oder Schwefeloxid-Speichers positionierten Lambda-Sonde erfaßt und auf einen zwischen einer oxidierenden oder stöchiometrischen Atmosphäre einerseits und einer reduzierenden Atmosphäre andererseits oszillierenden Sollwert eingeregelt wird.

4. Verfahren nach einem der Ansprüche 1 bis 3, weiter
**dadurch gekennzeichnet, daß** während einer anfänglichen Speicheraufheizphase (I) der jeweiligen Desulfatisierungsperiode das Speicherluftverhältnis (^{λ}_{S}) bleibend im fetten Bereich gehalten und dabei ein fettes Motorluftverhältnis (^{λ}_{M}) eingestellt und Sekundärluft zugeführt wird.

## Claims

1. Method of periodically removing sulphates from a nitrogen oxide or sulphur oxide storage device of an exhaust gas cleaning system of an internal combustion engine, whereby
- secondary air is delivered by associated secondary air delivery means to the nitrogen oxide or sulphur oxide storage device as well as an engine exhaust gas containing a reducing agent obtained by adjusting to a rich engine air ratio during a respective desulphation period and whereby
- once a pre-settable desulphation temperature is reached, the storage air ratio (λ_{S}) is adjusted during at least a part (III) of the desulphation period, by varying the quantity of secondary air (L) delivered and/or the engine air ratio (λ_{M}), in an oscillating fashion between an oxidising or stoichiometric atmosphere on the one hand and a reducing atmosphere on the other hand,
**characterised in that**
the oscillating adjustment of the storage air ratio (λ_{S}) is operated so that the storage air ratio (λ_{S}) remains in the middle within a reducing atmosphere.

2. Method as claimed in claim 1, further
**characterised in that**
the amplitude and/or the frequency of the oscillation of the storage air ratio (λ_{S}) is variably adjusted between oxidising or stoichiometric and reducing atmosphere depending on operating state.

3. Method as claimed in claim 1 or 2, further
**characterised in that**
the storage air ratio (λ_{S}) is detected by means of a Lambda sensor positioned upstream or downstream of the nitrogen oxide or sulphur oxide storage device and is controlled to a desired value oscillating between an oxidising or stoichiometric atmosphere on the one hand and a reducing atmosphere on the other hand.

4. Method as claimed in one of claims 1 to 3, further
**characterised in that**
during an initial phase (I) of the respective desulphation period when the storage device is heated, the storage air ratio (λ_{S}) is maintained so that it is always in the rich range and thus produces an adjustment to a rich engine air ratio (λ_{M}) and secondary air is introduced.

## Revendications

1. Procédé de désulfatation périodique d'un accumulateur d'oxydes azotiques ou d'oxydes de soufre faisant partie d'une installation de purification de gaz d'échappement d'un moteur à combustion interne, dans lequel
- pendant une période de désulfatation respective, on amène à l'accumulateur d'oxydes azotiques ou d'oxydes de soufre de l'air secondaire via des moyens associés d'alimentation en air secondaire, ainsi que des gaz d'échappement du moteur contenant un agent réducteur par réglage d'un rapport riche pour l'air de moteur,
- pendant une partie (III) au moins de la période de désulfatation, après avoir atteint une température de désulfatation prédéterminée, on règle le rapport d'air d'accumulateur (λ_{S}) par une modification correspondante de la quantité d'air secondaire amenée (L) et/ou du rapport d'air de moteur (λ_{M}) de façon oscillatoire entre une atmosphère oxydante ou stoechiométrique d'une part et une atmosphère réductrice d'autre part,
**caractérisé en ce que**
on procède au réglage oscillatoire du rapport d'air d'accumulateur (λ_{S}) de telle sorte que le rapport d'air d'accumulateur (λ_{S}) demeure en moyenne dans une atmosphère réductrice.

2. Procédé selon la revendication 1, **caractérisé en ce que** l'on règle de façon variable en fonction de l'état de fonctionnement l'amplitude et/ou la fréquence de l'oscillation du rapport d'air d'accumulateur (^{λ}_{S}) entre une atmosphère oxydante ou stoechiométrique et une atmosphère réductrice.

3. Procédé selon l'une ou l'autre des revendications 1 et 2, **caractérisé en ce que** l'on détecte le rapport d'air d'accumulateur (^{λ}_{S}) au moyen d'une sonde lambda positionnée en amont ou en aval de l'accumulateur d'oxydes azotiques ou d'oxydes de soufre, et on le règle à une valeur de consigne oscillant entre une atmosphère oxydante ou stoechiométrique d'une part et une atmosphère réductrice d'autre part.

4. Procédé selon l'une des revendications 1 à 3, **caractérisé en ce que** pendant une phase de chauffe initiale (I) de l'accumulateur de la période de désulfatation respective, on maintient le rapport d'air d'accumulateur (^{λ}_{S}) de manière à demeurer dans la plage riche et on règle ici un rapport d'air de moteur (^{λ}_{M}) riche et on amène de l'air secondaire.
